## Europäisches Patentamt
## European Patent Office
## Office européen des brevets

(11) Publication number: **0 004 115 B1**

# EUROPEAN PATENT SPECIFICATION

(45) Date of publication of patent specification: **19.01.83**

(21) Application number: **79200109.1**

(22) Date of filing: **03.03.79**

(51) Int. Cl.³: **C 08 G 18/38,** C 08 G 18/66, C 09 D 3/72

(54) **Process for the preparation of polyurethane-based lacquers.**

(30) Priority: **04.03.78 NL 7802414**

(43) Date of publication of application:
**19.09.79 Bulletin 79/19**

(45) Publication of the grant of the patent:
**19.01.83 Bulletin 83/3**

(84) Designated Contracting States:
**BE CH DE FR GB IT NL**

(56) References cited:
**US - A - 2 901 467**
**US - A - 3 174 950**
**US - A - 3 730 923**

(73) Proprietor: **STAMICARBON B.V.**
**Postbus 10**
**NL-6160 MC Geleen (NL)**

(72) Inventor: **Frisch, Kurt Charles**
**17986 Park Lane**
**Grosse Ile, Mich. 48138 (US)**
Inventor: **Tummers, Daniel Maria Joseph**
**Rubensstraat 21**
**NL-6165 TP Geleen (NL)**
Inventor: **Te Nijenhuis, Anne**
**Dr. Schaepmanstraat 52**
**NL-6444 XZ Brunssum (NL)**

(74) Representative: **Van de Panne, Vitus Nicolaas et al,**
**Octrooibureau DSM Postbus 9**
**NL-6160 MA Geleen (NL)**

Courier Press, Leamington Spa, England.

# 0 004 115

## Process for the preparation of polyurethane-based lacquers.

The invention relates to a process for preparing a lacquer or lacquer component obtained by reacting one or more polyisocyanates with one or more polyols together with at least one trihydroxy compound as cross-linking agent, if desired in the presence of a catalyst for the reaction, and other lacquer components conventionally used.

It is known that lacquers or lacquer components can be prepared from the reaction of a polyisocyanate, one or more polyhydroxy compourds, and at least one tri-hydroxy compound as cross-linking agent. It is possible to react the hydroxyl compounds and the polyisocyanate to form a prepolymer containing isocyanate groups, which prepolymer hardens in air while reacting with atmospheric water. It is also possible to convert one or more of the hydroxyl compounds into a prepolymer containing isocyanate groups and to add to this, in a second step, one or more hydroxyl compounds, hardening the mixture by stoving at elevated temperature. It is of importance that such reactants be selected as will form, in combination with the lacquer or lacquer component a coating showing a good combination of hardness and elasticity.

From US patent specification 3,730,923 it is known how to prepare a polyurethane foam from a tris (hydroxyethyl) isocyanurate optionally mixed with another polyol.

US patent specification 3,174,950 teaches a specific type of lacquer based on MDI as the polyisocyanate and tris (hydroxyethyl) isocyanurate optionally mixed with other polyols, as the hydroxylic components.

US patent specification 2,901,467 concerns the preparation of coatings based on a polymeric diol, optionally a low molecular weight diol, an aliphatic cross-linking triol and a polyisocyanate of the one-component air-drying type.

The invention provides a process for preparing a lacquer or lacquer component obtained by reacting one or more polyisocyanates with one or more polyols together with at least one tri-hydroxy compound as cross-linking agent, if desired in the presence of a catalyst for the reaction, and other lacquer components conventionally used, characterized in that

A) at least a part of the said polyol is provided by a polymeric polyol of molecular weight between 500 and 2000, containing 2 to 3 hydroxyl groups per molecule,

B) the said trihydroxy compound cross-linking agent is tris (N-$\beta$-hydroxypropyl) isocyanurate or ethoxylated tris (N-$\beta$-hydroxypropyl) isocyanurate containing 1 to 3 oxyethylene groups per molecule,

wherein the amounts of A) and B) are such that contained in the final product there are between 0.25 and 2.5 hydroxyl groups deriving from the total of the polyol(s) 'A' present for every hydroxyl group deriving from the said cross-linking agent 'B', and

C) one or more polyisocyanates are used in such an amount that there are ultimately between 0.99 and 1.10 NCO groups for every hydroxyl group present.

In addition to the said polymeric polyols, the starting materials may include as polyol a diol of molecular weight between 60 and 200, used in such an amount that for every hydroxyl group deriving from the said polymeric polyol there are up to 20 hydroxyl groups deriving from the said diol(s).

It has been found that the process according to the invention can provide single-component lacquers or two-component lacquers, for producing coatings having when hardened a high hardness combined with high impact resistance, good adhesion to the substrate, good corrosion resistance and favourable high-temperature properties.

The tris-(N-$\beta$-hydroxylpropyl)-isocyanurate can be prepared by reacting cyanuric acid with propylene oxide. By using this compound as the trihydroxy compound coats can be obtained which show higher hardness and better flexibility and adhesion than coats prepared on the basis of analogous formulations which incorporate a trihydroxy compound not containing an isocyanurate ring. Comparable results are obtained if ethoxylated tris-(N-$\beta$-hydroxypropyl)-isocyanurate is used. This compound can be obtained by reacting one mole of tris-(N-$\beta$-hydroxypropyl)-isocyanurate with from one to about three, and preferably three, moles of ethylene oxide. The ethoxylated derivative is somewhat more reactive than the non-ethoxylated compound due to the presence of primary hydroxy groups, and thus the use of a diol component of the total polyol compound may, if desired be omitted.

At least a part of the hydroxyl groups in the starting materials is provided by the polymeric polyhydroxy compound. Such polymeric polyols contain from 2 to 3, preferably 2, hydroxyl groups per molecule. Suitable polymeric polyols include the poly-oxyalkylene glycols containing $C_{2-4}$ oxyalkylene units e.g. polyethylene glycol, polypropylene glycol, random or block copolymers of ethylene oxide and propylene oxide, adducts of ethylene oxide or propylene oxide to a trihydroxy compound, polylactone diols derived from a lactone containing 5—12 C atoms, for instance hydroxyl-terminated polycaprolactone or polyvalerolactone or co-polylactones, hydroxyl-terminated polyesters, butadiene polymers containing hydroxyl groups or copolymers of butadiene with e.g. acrylonitrile, isoprene and/or styrene containing hydroxyl groups, and hydroxyl group containing polyacrylates. The polyesters have usually been obtained by reacting one or more $C_4$—$C_{10}$ aliphatic and/or aromatic carboxylic acids, for instance adipic acid, azelaic acid, phthalic acid or terephthalic acid, and one or more aliphatic and/or cycloaliphatic diols, for instance ethylene glycol, diethylene glycol, 1,4-butane diol, 1,6-hexane diol,

2

propylene glycol or 1,4-(hydroxymethyl)-cyclohexane. The butadiene (co)polymers containing hydroxyl groups usually contain more than 2, e.g. between 2.0 and 2.3, hydroxyl groups. Particularly suitable polymeric polyols are the polyalkylene glycols, the hydroxyl-terminated polylactones, the hydroxyl-terminated polyesters and the hydroxyl group containing polyacrylates.

In some embodiments of the invention use is made of a low molecular-weight diol that can function as chain extender in addition to the polymeric polyol, such diols having a molecular weight of at least 62 but not more than 200, as hereinbefore set forth. Examples are aliphatic unbranched diols e.g. ethylene glycol, 1,4-butane diol, and 1,6-hexane diol; branched diols e.g. propylene glycol and 2,2-dimethyl-1,4-butane diol; low molecular-weight polyalkylene glycols e.g. diethylene glycol, triethylene glycol and cycloaliphatic diols e.g. 1,4(hydroxymethyl)-cyclohexane. Preferably use is made of $C_2$—$C_6$ aliphatic diols.

If the said low molecular-weight diols are used they are present in an amount so that up to 20, preferably from 0.5 to 5.0, and particularly from 1.0 to 4.0, hydroxyl groups are present in the starting materials deriving from the said low molecular-weight diol, for every hydroxyl group deriving from the polymeric polyol(s).

As the quantity of tris-(N-$\beta$-hydroxypropyl)-isocyanurate or its ethoxylated derivative used rises in proportion to the total quantity of the polyols present the density of cross-linking increases, so that the hardness of the coats increases and the flexibility decreases. The cross-linking agent is used in an amount that for every hydroxyl group deriving from the isocyanurate, the lacquer or lacquer component contains between 0.25 and 2.50, preferably between 0.5 and 2, hydroxyl groups deriving from other polyols.

The polyisocyanates used may be conventionally-used polyisocyanates for example toluene diisocyanates or 4,4-diisocyanatodiphenyl methane. The preferred polyisocyanates are saturated aliphatic or cycloaliphatic diisocyanates, e.g. hexamethylene diisocyanate, isophorone diisocyanate, and 4,4-diisocyanato-dicyclohexyl methane. Also suitable are polyisocyanates are those obtained by catalytic trimerisation of a diisocyanate or by reacting three moles of a diisocyanate with one mole of water or a trihydroxy compound.

In hardening the lacquers, used is made preferably of a catalyst which accelerates isocyanate reactions without giving rise to simultaneous trimerization. Use may be made of the compounds commonly used, notably the nitrogenous catalysts, e.g. triethylene diamine, and the tin-containing catalysts, e.g. dibutyl tin dilaurate. Hardening is effected in the case of a single-component lacquer by exposing a reaction product containing free isocyanate groups to the air, and in the case of a two-component lacquer by reacting a prepolymer containing isocyanate groups with a polyol, preferably at elevated temperature, e.g. 75—175°C.

Use may be made of solvents commonly used. The concentration of the binder, or the prepolymers and cross-linking agents, in the lacquer may be between 40 and 90 per cent by weight. If desired, the binder may be used in powder form. In that case the isocyanate groups in the prepolymer may be blocked by means of, e.g., phenol, a cresol, caprolactam or methylethylketone oxime, and a levelling agent is added.

If the object is the preparation of a binder for a single-component lacquer, the polyisocyanate is reacted with the polymeric polyol and tris-(N-$\beta$-hydroxypropyl)-cyanurate of its ethoxylated derivative, and, optionally, the low-molecular-weight diol in one or more steps to form a prepolymer containing free isocyanate groups. To this are added auxiliary agents customarily used in lacquers, and a catalyst. If the object is to produce a binder for a two-component lacquer, a prepolymer containing isocyanate groups may be prepared, as described above. This is then combined with a lacquer to which shortly before use a solution of the isocyanurate cross-linking agent and catalyst is added. Preferably, however, the prepolymer is prepared from the polyisocyanate, the polymeric polyol, and part of the isocyanurate cross-linking agent, with NCO to OH ratio of at least 2:1.

The ratio between the hydroxyl groups deriving from the isocyanurate triol and from the other polyols may in said prepolymer be between 1:0.1 and 1:1.5, preferably between 1:0.5 and 1:1.0. Optionally, the free isocyanate groups of the prepolymer may be blocked. The lacquer is ready for use then consists of a component containing the prepolymer, and a second component which contains the balance of the isocyanurate triol, the low-molecular-weight diol, and the catalyst.

It is also possible to obtain a two-component lacquer by dissolving in one component the polymeric polyol, optionally low-molecular-weight diol, and catalyst, and dissolving in the second component the reaction product obtained by reacting the isocyanurate cross-linking agent with the polyisocyanate, at an NCO to OH ratio of 2:1 to 2.1:1.

The invention will be elucidated by means of the following examples.

Example I

A prepolymer was prepared by adding together, in a flask under nitrogen and with exclusion of air, 40 g of a 50-%-wt. solution of tris-(N-$\beta$-hydroxypropyl)-isocyanurate, hereinafter referred to as THPIC, in dimethyl formamide, 40 g of poly(oxytetramethylene) glycol having a molecular weight of 662, 79 g of 4,4'-diisocyanato dicyclohexyl methane, 72 g of Cellosolve acetate (The word Cellosolve is a Trade Mark), and 0.03 g of dibutyltin dilaurate.

## 0 004 115

The mixture was reacted for 6 hours at 70°C. In this way a 60-%-wt. solution of the prepolymer 1, with an NCO content of 4.5% was obtained. The prepolymer was used in four different clear lacquers by mixing the components mentioned below.

Lacquer 1—1 30 g of prepolymer solution and 0.03 g of triethylene diamine (20-%-wt. solution in dimethylaminoethanol).

Lacquer 1—2 33 g of prepolymer solution, 7.3 g of 50-%-wt. solution of THPIC in dimethyl formamide, and 0.045 g of dibutyltin dilaurate.

Lacquer 1—3 33 g of prepolymer solution, 1.5 g of butanediol, and 0.045 g of dibutyltin dilaurate.

Lacquer 1—4 33 g of prepolymer solution, 0.9 g of butane diol, 2.9 g of 50-% THPIC solution, and 0.045 g of dibutyltin dilaurate.

Example II

In the way described in Example I a number of prepolymers A to D, were prepared in the form of 60-%-wt. solutions, as well as one reference prepolymer solution F, according to US patent specification 2,901,467. The reactants used are mentioned in Table 1, with quantities being expressed in grams.

TABLE 1

|  | A | B | C | D | F |
|---|---|---|---|---|---|
| THPIC (50-% solution) | 40 | 40 | 40 | 40 | — |
| 4,4' diisocyanate dicyclohexyl methane | 79 | 79 | 79 | 57.6 | 79 |
| cellosolve acetate | 72 | 78 | 76 | 62.4 | 45 |
| toluene | — | — | — | — | 45 |
| dibutyl tin dilaurate | — | — | 0.015 | — | 0.015 |
| poly(oxytetramethylene)glycol, mol. weight 662 | 40 | — | — | — | 40 |
| polycaprolactone diol, mol. wt. 813 | — | 49 | — | — | — |
| poly(oxypropylene)glycol, mol. weight 768.4 | — | — | 46 | — | — |
| hydroxyl-containing polybutadiene, mol. wt. 2800, equivalent wt 1204 | — | — | — | 46 | — |
| trimethylolpropane-propylene oxide adduct, mol. weight 303 | — | — | — | — | 18 |

The prepolymers A—D were combined with clear lacquers by mixing a quantity of prepolymer solution with 2.9 g of 50-% THPIC solution, 0.9 g of butanediol, 3 g of toluene, and 0.045 g of dibutyltin dilaurate. In lacquer F 1.4 g of the trimethylolpropane-propylene oxide adduct was used instead of the THPIC solution. The quantities of prepolymer were:

Lacquer 2—A 26.9 g
2—B 28.6 g
2—C 29.1 g
2—D 32.7 g
2—F 26.5 g

Example III

In the way described in Example I a prepolymer, in the form of a 60-%-wt. solution, was prepared from 66 g of THPIC (50-% solution), 78.6 g of 4,4-diisocyanate dicyclohexyl methane, 20.7 g of Cellosolve acetate, and 20.7 g of toluene.

This prepolymer was used to prepare two clear lacquers, by mixing 24.8 g of prepolymer solution with 5.0 g of cellosolve acetate, 5.0 g of toluene, 0.03 g of dibutyl tin dilaurate and, in lacquer 3—1, 4.0 g of poly(oxytetramethylene)glycol-662 and 1.3 g of butane diol, and in lacquer 3—2, 5.3 g of poly(oxytetramethylene)glycol-662 and 1.1 g of butane diol.

Example IV

The lacquers obtained in Examples I—III were applied to phosphated steel and to glass, as a 0.127 mm thick coat. The coats were hardened for 12 hours at 25°C and for 2 hours at 100°C, after which they were conditioned at room temperature for at least 48 hours. The coats were examined in the way described below. The Sward hardness was determined by the method described in Gardner and Sward's 'Paint Testing Manual', 12th ed., Ch. 5, ASTM, 472. The impact resistance was

4

determined in accordance with ASTM Standard D—2794—69, by means of a Gardner-Impact apparatus (bar weighing 1.8 kg, cross-section of punch 1.25 cm, cross-section of die 1.43 cm).

The water resistance is defined as the time for which the lacquered glass plate has to be immersed in water at room temperature before the lacquer film can be peeled off. The film of lacquer removed from the glass plate was dried in air for at least 24 hours and then used for determining the tensile strength. This test was carried out with an Instron bench-type tensile tester, using a rate of pull of 12.7 cm/minute.

The results of the tests are compiled in Table 2.

TABLE 2

| lacquer | hardness (Sward) | impact Gardner, direct | resistance m/kgf indirect | tensile strength N/mm² | elongation % | water resistance hours |
|---|---|---|---|---|---|---|
| 1—1 | 45 | 7.3 | 2.8 | 37.9 | 6.3 | 1 |
| 1—2 | 49 | 3.4 | <0.5 | — | — | 1 |
| 1—3 | 35 | >9.0 | >9.0 | 48.4 | 11.5 | 2 |
| 1—4 | 45 | 8.4 | 8.4 | 45.4 | 8.7 | 1 |
| 2—A | 60 | >9.0 | >9.0 | 51.1 | 9.5 | 1 |
| 2—B | 52 | 9.0 | 5.6 | 52.3 | 12.5 | 1 |
| 2—C | 46 | 6.7 | <1.1 | 45.6 | 8.3 | 1 |
| 2—D | 22 | >9.0 | >9.0 | 26.2 | 73 | 2 |
| 2—F* | 40 | >9.0 | 9.0 | 36.7 | 17.7 | 1 |
| 3—1 | 56 | 6.7 | 1.1 | 57.9 | 8.3 | 5 |
| 3—2 | 55 | >9.0 | >9.0 | 53.3 | 8.3 | 1 |

*not prepared in accordance with the invention (US 2,901,467).

Example V

Two-component polyurethane coatings were prepared in which ethoxylated tris-($\beta$-hydroxypropyl)isocyanurate, hereinafter referred to as 'THEPIC', was used. This compound was prepared by reacting 3.1 moles of ethylene oxide with one mole of THPIC. It had a molecular weight of 467.4 and an equivalent weight of 155.8. An isocyanate terminated prepolymer was prepared by reacting 1 mole of THEPIC with 3 moles of 4,4'-dicyclohexylmethane diisocyanate, dissolved in 537 g toluene, with 0.02 wt-% of dibutyltin dilaurate as catalyst. The prepolymer had an equivalent weight of 596.8 g per isocyanate group. The prepolymer was cured with a polymeric polyol at an NCO/OH ratio of 1.05. In lacquer 5—A, the polymeric polyol was a hydroxyl-terminated polyester with an equivalent weight of 260 (obtained under the Trade Mark Desmophen 1100, obtained from Mobay Corp, USA). The solids content of the mixture was 60-wt-% and pot life was 7 hours. In lacquer 5—B, the polymeric polyol was a hydroxyl group containing polyacrylate with an equivalent weight of 1000 as 60-wt-% solution (Acryloid AU—680 obtained from Rohm & Haas). The solids content of the mixture was 50 wt-% and the pot life was 12 hours.

Both lacquers were coated on glass and on steel panels as described in Example IV and the physical properties were tested. The results are presented in table 3.

Example VI

Two-component coatings were prepared using THEPIC as described in Example V. The polyisocyanate component was mixed with a mixture of THEPIC and a polymeric polyol, at an overall NCO/OH ratio of 1.05.

The polyisocyanate was the reaction product of 3 moles of hexamethylene diisocyanate with one mole of water, present available as 75 wt-% solution in a 1:1 mixture of xylene and Cellosolve acetate (obtained under the Trade Mark Desmodur N—75 of Mobay Corp). The solution has an equivalent weight of 255.

In lacquer 6—A, 267.7 g of the polyisocyanate were mixed with 77.9 g of THEPIC and 500 g of the hydroxyl group containing polyacrylate (obtained under the Trade Mark Acryloid AU—680) and 0.05 wt-% of dibutyltin dilaurate and 1.0 wt-% of a 10% solution of cellulose acetate butyrate in Cellosolve acetate were added. The pot life of the composition was 1.75 hour.

In lacquer 6—B, 267.7 g of the polyisocyanate were mixed with 116.8 g of THEPIC and 250 g of the polyacrylate (Acryloid AU—680) and the same amount of catalyst and cellulose acetate butyrate were added as above. The pot life was 1.5 hour.

Both laquers were coated glass and steel panels as described in Example IV. The properties are presented in table 3.

Example VII

One-component urethane coatings were prepared based on THEPIC and toluene diisocyanate (80/20 2.4—2.6). First a prepolymer was prepared by reacting one mole THEPIC with three moles of toluene diisocyanate in toluene, after which two moles of the adduct were extended with two moles of poly(oxypropylene)glycol in Cellosolve acetate. As catalyst 0.3 wt-% of triethylenediamine were added.

Lacquer 7—A was prepared using polyoxypropyleneglycol with an equivalent weight of 384.2 (obtained under the Trade Mark Pluracol P—710 of BASF Wyandotte). The resulting prepolymer had an equivalent weight of 686.8 per isocyanate group, a NCO-content as 60 wt-% solution of 3.67% and a pot life of 4 hours.

Lacquer 7—B was prepared using poly(oxypropylene)glycol with an equivalent weight of 216.6 (Pluracol P—410 of BASF Wyandotte). The resulting prepolymer had an equivalent weight of 603.0. The 60 wt-% solution had a NCO-content of 4.18% and a pot life of 7 hours.

Both lacquers were coated on glass and steel panels. The physical properties are presented in table 3.

TABLE 3

| Lacquer | 5—A | 5—B | 6—A | 6—B | 7—A | 7—B |
|---|---|---|---|---|---|---|
| Sward hardness | 36 | 24 | 16 | 20 | 22 | 44 |
| Gardner impact resistance m/kgf | | | | | | |
| —direct | 9.0 | 7.8 | n.d. | n.d. | >9.0 | >9.0 |
| —indirect | 5.0 | 1.7 | n.d. | n.d. | >9.0 | 5.0 |
| Tensile strength N/mm$^2$ | 50.1 | 20.9 | 20.5 | 23.7 | 39.0 | 54.5 |
| Elongation % | 50 | 75 | 115 | 90 | 52 | 45 |
| Abrasion*, g | 0.0132 | 0.0820 | 0.0192 | 0.0185 | n.d. | n.d. |

*determined according to ASTM D—1044 with the CS—17 wheel, 1000 g load, and expressed as the loss of weight after 1000 cycles.

Lacquers 6—A and 6—B were tested for corrosion resistance by putting coated mild steel panels in a spray chamber (5% NaCl solution, 27°C). After two weeks the cross-hatched panels showed no visible creep of rust.

**Claims**

1. A process for preparing a lacquer or lacquer component obtained by reacting one or more polyisocyanates with one or more polyols together with at least one trihydroxy compound as cross-linking agent, if desired in the presence of a catalyst for the reaction, and other lacquer components conventionally used, characterized in that
A) at least a part of the said polyol is provided by a polymeric polyol of molecular weight between 500 and 2000, containing 2 to 3 hydroxy groups per molecule,
B) the said trihydroxy compound cross-linking agent is tris-(N-$\beta$-hydroxypropyl)-isocyanurate or ethoxylated tris(N-$\beta$-hydroxypropyl)-isocyanurate containing 1 to 3 oxyethylene groups per molecule, wherein the amounts of A) and B) are such that contained in the final product there are between 0.25 and 2.5 hydroxyl groups deriving from the total of the polyol(s) 'A' present for every hydroxyl group deriving from the said cross-linking agent 'B', and
C) one or more polyisocyanates are used in such an amount that there are ultimately between 0.99 and 1.10 NCO groups for every hydroxyl group present.

2. A process according to Claim 1, wherein a part of the said polyols is provided by one or more diols of molecular weight of at least 62 but not more than 200, used in such an amount that for every hydroxyl group deriving from the said polymeric polyol there are up to 20 hydroxyl groups deriving from the said diol(s).

3. A process according to Claim 2, wherein the said diol is a C$_2$—C$_6$ aliphatic diol and is used in such a proportion that for every hydroxyl group deriving from the polymeric polyol there are from 0.5 to 5.0 hydroxyl groups deriving from the said aliphatic diol.

4. A process according to any of Claims 1 to 3, wherein the said polymeric polyol is a compound selected from the group consisting of: polyoxyalkylene glycols derived from one or more C$_{2-4}$ aliphatic

6

diols, hydroxyl-terminated polylactones, hydroxyl-terminated polyesters, butadiene polymers containing hydroxyl groups or copolymers of butadiene with acrylonitrile, isoprene or styrene containing hydroxyl groups, and hydroxyl group-containing polyacrylates.

5. A process according to any of Claims 1 to 4, wherein a prepolymer is prepared by reacting the isocyanate, the polymeric polyol and at least part of the tris-(N-$\beta$-hydroxypropyl)-isocyanurate or its ethoxylated derivative in such a proportion that there are at least 2 isocyanate groups for every hydroxyl group, and to effect cross-linking the said prepolymer is mixed with a further amount of the isocyanurate or ethoxylated isocyanurate, optionally with the said diol, so that there are ultimately between 0.99 and 1.10 free NCO groups for every hydroxyl group.

6. A process according to Claim 5, wherein the prepolymer contains from 0.1 to 1.5 hydroxyl groups deriving from the polymeric polyol for every hydroxyl group deriving from the said isocyanurate, or ethoxylated isocyanurate.

7. A process according to any of Claims 2 to 4, wherein a prepolymer is prepared by reacting the polyisocyanate with the said isocyanurate or ethoxylated isocyanurate at an NCO to OH ratio of between 2.0:1 and 2.1:1, and to effect cross-linking the polymeric polyol and the said diol are added thereto.

## Patentansprüche

1. Verfahren zur Herstellung einer Lackfarbe oder einer Lackfarbenkomponente durch Reaktion eines oder mehrer Polyisocyanate mit einem oder mehreren Polyolen zusammen mit wenigstens einer Trihydroxyverbindung als Vernetzungsmittel, falls erwünscht in Anwesenheit eines Reaktionskatalysators und anderer üblicherweise verwendeter Lackfarbenkomponenten, dadurch gekennzeichnet, dass

A) wenigstens ein Teil des genannten Polyols mit einem polymeren Polyol mit einem Molekulargewicht zwischen 500 und 2000 ausgerüstet ist, das 2 bis 3 Hydroxylgruppen je Molekül enthält,

B) es sich bei der als Vernetzungsmittel verwendeten Trihydroxy-Verbindung um Tris-(N-ß-Hydroxylpropyl)-Isocyanurat oder um äthoxyliertes Tris-(N-ß-Hydroxypropyl)-Isocyanurat mit 1 bis 3 Oxyäthylengruppen je Molekül handelt,

worin die Mengen von A) und B) so bemessen sind, dass im Endprodukt zwischen 0,25 und 2,5 Hydroxylgruppen, die von der Gesamtheit des (der) vorhandenen Polyols (Polyole) 'A' abgeleitet sind auf jede vom genannten Vernetzungsmittel B abgeleitete Hydroxylgruppe entfallen und

C) ein oder mehrere Polyisocyanate in einer solchen Menge verwendet werden, dass schliesslich zwischen 0,99 und 1,10 NCO-Gruppen auf jede vorhandene Hydroxylgruppe entfallen.

2. Verfahren nach Anspruch 1, in dem ein Teil des genannten Polyols mit einem oder mehreren Diolet mit einem Molekulargewicht von mindestens 62, jedoch nicht mehr als 200 ausgerüstet ist, und zwar in einer solchen Menge verwendet, dass für jede Hydroxylgruppe, die von dem genannten polymeren Polyol abgeleitet ist, bis zu 20 Hydroxylgruppen vorhanden sind, die aus dem (den) genannten Diol(en) abgeleitet sind.

3. Verfahren nach Anspruch 2, in dem das genannte Diol ein aliphatisches C2—C6 Diol ist und in einer solchen Menge verwendet wird, dass auf jede Hydroxylgruppe, die vom polymeren Polyol abgeleitet ist, 0,5 bis 5,0 von dem genannten aliphatischen Diol abgeleitete Hydroxylgruppen entfallen.

4. Verfahren nach einem der Ansprüche 1 bis 3, in dem das genannte polymere Polyol eine aus der folgenden Gruppe ausgewählte Verbindung ist: von einem oder mehreren aliphatischen C2—4 Diolen abgeleitete Polyoxyalkylenglykole, Hydroxyl-begrenzte Polylactone, Hydroxylbegrenzte Polyester, Butadienpolymere die Hydroxylgruppen enthalten oder Butadien-Copolymere mit Acrylnitril, Isopren oder Styren enthaltenden Hydroxylgruppen und Hydroxylgruppen enthaltenden Polyacrylate.

5. Verfahren nach einem der Ansprüche 1 bis 4, in dem ein Vorpolymer durch Reaktion des Isocyanats, des polymeren Polyols und mindestens eines Teils der Tris-(N-ß-Hydroxypropyl)-Isocyanurats oder seines äthoxylierten Derivats hergestellt wird, und zwar in einem solchen Verhältnis, dass mindestens 2 Isocyanatgruppen auf jede Hydroxylgruppe entfallen und dass zwecks Vernetzung das genannte Vorpolymer mit einer weiteren Menge des Isocyanurats oder des äthoxylinerten Isocyanurats vermischt wird, falls erwünscht mit dem genannten Diol, so dass schliesslich zwischen 0,99 und 1,10 freie NCO-Gruppen auf jede Hydroxylgruppe entfallen.

6. Verfahren nach Anspruch 5, in dem das Vorpolymer für jede von dem genannten Isocyanurat bzw. äthoxylierten Isocyanurat abgeleitete Hydroxylgruppe zwischen 0,1 und 1,5 von dem polymeren Polyol abgeleitete Hydroxylgruppen enthält.

7. Verfahren nach einem der Ansprüche 2 bis 4, in dem ein Vorpolymer hergestellt wird durch Reaktion des Polyisocyanats mit dem genannten Isocyanurat bzw. äthoxylierten Isocyanurat in einem NCO- zu OH-verhältnis zwischen 2,0:1 und 2,1:1, wobei zwecks Vernetzung das polymere Polyol und das genannte Diol hierzu hinzugefügt werden.

## Revendications

1. Un procédé pour la préparation d'une laque ou d'un constituant de laque obtenus en faisant réagir un ou plusieurs polyisocyanates avec un ou plusieurs polyols en même temps qu'avec au moins un composé trihydroxylé comme agent de réticulation, éventuellement en présence d'un catalyseur pour la réaction et d'autres constituants de laque utilisés de manière classique, caractérisé en ce que:

A) au moins une partie du polyol est fournie par un polyol polymère de poids moléculaire compris entre 500 et 2000, contenant 2 à 3 groupes hydroxyle par molécule,

B) le composé trihydroxylé utilisé comme agent de réticulation est l'isocyanurate de tris(N-bêta-hydroxypropyle) ou un isocyanurate de tris(N-bêta-hydroxypropyle) éthoxylé contenant 1 à 3 groupes oxyéthylène par molécule, les quantités de A) et B) étant telles que dans le produit final il y ait entre 0,25 et 2,5 groupes hydroxyle provenant du total du ou des polyols ''A'' présents pour chaque groupe hydroxyle provenant de l'agent de réticulation ''B'', et

C) on utilise un ou plusieurs polyisocyanates en quantité telle qu'il y ait finalement entre 0,99 et 1,10 groupe NCO pour chaque groupe hydroxyle présent.

2. Un procédé selon la revendication 1, dans lequel une partie des polyols est fournie par un ou plusieurs diols d'un poids moléculaire d'au moins 62, mais de pas plus de 200, utilisés en quantité telle que pour chaque groupe hydroxyle provenant du polyol polymère il y ait jusqu'à 20 groupes hydroxyle provenant du ou des diols.

3. Un procédé selon la revendication 2, dans lequel le diol est un diol aliphatique en $C_2$—$C_6$ et est utilisé dans une proportion telle que pour chaque groupe hydroxyle provenant du polyol polymère il y ait de 0,5 à 5,0 groupes hydroxyle provenant du diol aliphatique.

4. Un procédé selon l'une quelconque des revendications 1 à 3, dans lequel le polyol polymère est choisi parmi: des polyoxyalcoylène-glycols dérivés d'un ou plusieurs diols aliphatiques en $C_{2-4}$, des polylactones à groupes terminaux hydroxyle, des polyesters à groupes terminaux hydroxyle, des polymères de butadiène contenant des groupes hydroxyle ou des copolymères du butadiène avec l'acrylonitrile, l'isoprène ou le styrène contenant des groupes hydroxyle et des polyacrylates contenant des groupes hydroxyle.

5. Un procédé selon l'une quelconque des revendications 1 à 4, dans lequel on prépare un prépolymère en faisant réagir l'isocyanate, le polyol polymère et au moins une partie de l'isocyanurate de tris-(N-bêta-hydroxypropyle) ou de son dérivé éthoxylé dans une proportion telle qu'il y ait au moins 2 groupes isocyanate pour chaque groupe hydroxyle, et pour effectuer la réticulation on mélange ce prépolymère avec une quantité supplémentaire de l'isocyanurate ou de l'isocyanurate éthoxylé, éventuellement avec le diol, de façon qu'il y ait finalement entre 0,99 et 1,10 groupe NCO libre pour chaque groupe hydroxyle.

6. Un procédé selon la revendication 5, dans lequel le prépolymère contient de 0,1 à 1,5 groupe hydroxyle dérivé du polyol polymère pour chaque groupe hydroxyle dérivé de l'isocyanurate ou de l'isocyanurate éthoxylé.

7. Un procédé selon l'une quelconque des revendications 2 à 4, dans lequel on prépare un prépolymère en faisant réagir le polyisocyanate avec l'isocyanurate ou l'isocyanurate éthoxylé à un rapport de NCO à OH compris entre 2,0:1 et 2,1:1 et pour effectuer la réticulation on ajoute au prépolymère le polyol polymère et le diol.